(19) **Europäisches Patentamt / European Patent Office / Office européen des brevets**

(11) **EP 1 335 277 B1**

(12) **FASCICULE DE BREVET EUROPEEN**

(45) Date de publication et mention
de la délivrance du brevet:
**12.08.2009 Bulletin 2009/33**

(51) Int Cl.:
*G06F 7/499* *(2006.01)*      *G06F 7/50* *(2006.01)*
*G06F 7/509* *(2006.01)*      *G06F 7/544* *(2006.01)*

(21) Numéro de dépôt: **03354010.5**

(22) Date de dépôt: **06.02.2003**

(54) **Opérateur saturant à haute efficacité**

Effiziente sättigende Operation

Efficient saturating operation

(84) Etats contractants désignés:
**DE FR GB IT**

(30) Priorité: **08.02.2002 FR 0201569**

(43) Date de publication de la demande:
**13.08.2003 Bulletin 2003/33**

(73) Titulaire: **STMicroelectronics S.A.**
**92120 Montrouge (FR)**

(72) Inventeur: **Dupont de Dinechin, Benoît**
**38000 Grenoble (FR)**

(74) Mandataire: **de Beaumont, Michel**
**Cabinet Michel de Beaumont**
**1, rue Champollion**
**38000 Grenoble (FR)**

(56) Documents cités:
**US-A- 5 889 689**      **US-B1- 6 182 105**

**Description**

La présente invention concerne de façon générale le traitement de signaux numériques et plus particulièrement les opérateurs saturants.

De tels opérateurs ont un effet technique important. Ils sont utilisés dans de nombreux circuits de traitement du signal, par exemple dans les circuits de codage ou décodage de la parole pour téléphone mobile, où les algorithmes de codage et de décodage utilisent des nombres signés fractionnaires.

Les nombres signés fractionnaires sont des nombres compris entre -1 et +1, codés de façon générale sur n bits. Ce sont des nombres signés, le bit de rang n (bit le plus significatif) étant égal à 1 pour les nombres négatifs et à 0 pour les nombres positifs. Précisément, la valeur attribuée à un nombre fractionnaire de n bits est la valeur de l'entier correspondant en complément à deux, divisée par $2^{n-1}$.

La représentation fractionnaire est un moyen permettant d'utiliser des modules de calcul qui travaillent sur des nombres entiers. Il en résulte des circuits plus faciles à réaliser au niveau matériel que des circuits utilisant une arithmétique à virgule flottante. Ces circuits utilisent aussi moins de mémoire et consomment moins.

Le brevet américain N°6 182 105 décrit un circuit pour additionner plusieurs opérandes avec saturation de résultats intermédiaires. Dans ce brevet, un premier additionneur/soustracteur combine une première entrée avec le nombre positif le plus élevé possible. Un deuxième additionneur/soustracteur, opérant en parallèle avec le premier, combine la première entrée avec le nombre négatif le plus grand possible. Un troisième additionneur combine les première, deuxième et troisième entrées. Un multiplexeur sélectionne une des sommes potentielles ou les nombres positifs ou négatifs les plus élevés possibles comme résultat final.

Un opérateur dit "saturant" est un opérateur réalisant des opérations saturantes, par exemple des additions et des multiplications saturantes.

Une addition saturante, que l'on désignera ici par le symbole +, est une addition de deux nombres signés fractionnaires, dont le résultat est un nombre signé fractionnaire. Cela signifie que si une des deux valeurs extrêmes de la représentation fractionnaire est dépassée lors de l'addition, le résultat est porté à la valeur extrême dépassée. Ainsi, si l'addition saturante de deux nombres signés fractionnaires codés sur n bits donne un résultat plus grand que 1, celui-ci est ramené à la valeur maximale pouvant être prise par un nombre signé fractionnaire codé sur n bits, soit $1-2^{-n+1}$. De même, si le résultat d'une addition saturante est plus petit que -1, le résultat de l'addition est ramené au nombre minimal représentable à l'aide de n bit dans une représentation fractionnaire de nombres signés, soit -1.

De façon similaire, une multiplication saturante, désignée ici par le symbole x est une multiplication dont le résultat appartient au domaine des nombres signés fractionnaires auquel appartiennent les opérandes. Si le résultat de la multiplication dépasse une des deux valeurs extrêmes de cette représentation, il est ramené à la valeur extrême dépassée.

L'addition et la multiplication saturantes sont toutes deux commutatives, mais non associatives.

Un dispositif comme un téléphone mobile comprend un micro-contrôleur, des processeurs de traitement de signal DSP ("Digital Signal Processor") et des blocs matériels dédiés DHB ("Dedicated Hardware Bloc"). Les processeurs de traitement de signal et les blocs matériels dédiés sont utilisés pour réaliser un grand nombre de fonctions diverses, par exemple du cryptage, des calculs de transformée de Fourier, du codage MPEG etc. De nombreux traitements numériques doivent en outre être exacts au bit près. Cela signifie que le traitement d'une suite d'échantillons numériques de référence dans un appareil doit fournir la même suite numérique qu'un algorithme de référence pour que l'appareil soit certifié, des organismes de normalisation, comme l'ITU (International Telecommunication Union) ou l'ETSI (European Telecommunications Standard Institute), se chargeant de fournir les échantillons/algorithmes de référence et de certifier les appareils.

Pour fournir un résultat exact au bit près, un processeur de traitement de signal ou un bloc matériel dédié comprend en général de nombreux circuits de type MAC ("Multiply ACcumulate operator" - "Opérateur de multiplication-accumulation").

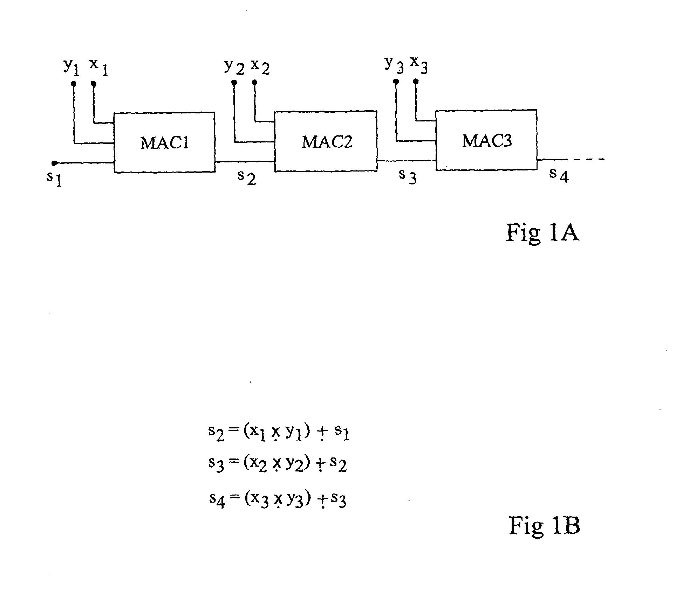

La figure 1A représente une suite de trois opérateurs de type MAC en série, MAC1, MAC2 et MAC3. L'opérateur MAC1 reçoit sur trois bornes d'entrée trois opérandes $x_1$, $y_1$ et $s_1$. De façon connue, l'opérateur MAC1 fournit un résultat :

$$s_2 = (x_1 \overset{x}{_\circ} y_1) \overset{+}{_\circ} s_1.$$

Le deuxième opérateur, MAC2, reçoit deux opérandes $x_2$, $y_2$, ainsi que le résultat $s_2$ de l'opérateur MAC1. Il fournit un résultat égal à :

$$s_3 = (x_2 \overset{x}{_\circ} y_2) \overset{+}{_\circ} s_2.$$

Le troisième opérateur, MAC3, reçoit deux opérandes $x_3$ et $y_3$, ainsi que le résultat $s_3$ de l'opérateur MAC2. L'opérateur MAC3 fournit un résultat $s_4$ égal à :

$$s_4 = (x_3 \underset{\circ}{\times} y_3) \underset{\circ}{+} s_3$$

Les expressions des résultats $s_2$, $s_3$ et $s_4$ sont reprises en figure 1B.

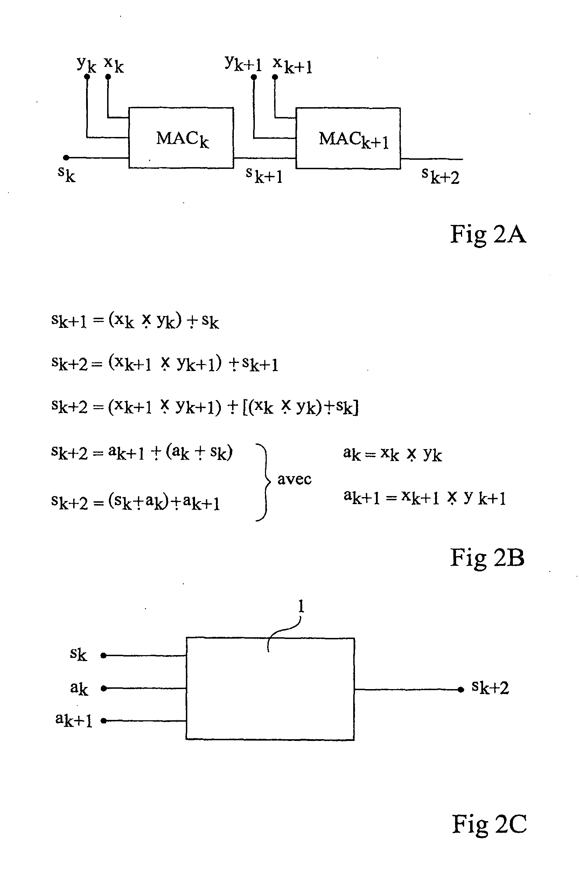

Le nombre des calculs nécessitant des opérateurs de type MAC est en général très élevé. Pour gagner de la place et du temps de traitement, il est connu de regrouper les opérateurs par deux comme cela est illustré en relation avec les figures 2A à 2C.

La figure 2A représente deux opérateurs de type MAC, $MAC_k$ et $MAC_{k+1}$, connectés à la suite l'un de l'autre. L'opérateur $MAC_k$ reçoit des opérandes $x_k$ et $y_k$ et un opérande $s_k$ provenant de l'opérateur précédent. L'opérateur $MAC_k$ fournit un signal $s_{k+1}$ égal à : $s_{k+1} = (x_k \underset{\circ}{\times} y_k) \underset{\circ}{+} s_k.$ .

L'opérateur $MAC_{k+1}$ reçoit les opérandes $x_{k+1}$, $y_{k+1}$ et $s_{k+1}$. Il fournit un résultat $s_{k+2}$ égal à :

$$s_{k+2} = (x_{k+1} \underset{\circ}{\times} y_{k+1}) \underset{\circ}{+} s_{k+1}.$$

Comme on peut le voir en figure 2B, qui reprend les expressions de $s_{k+1}$ et $s_{k+2}$, $s_{k+2}$ est égal à $s_{k+2} = (x_{k+1} \underset{\circ}{\times} y_{k+1}) \underset{\circ}{+} [(x_k \underset{\circ}{\times} y_k) \underset{\circ}{+} s_k)].$ En prenant $a_k = x_k \underset{\circ}{\times} y_k$ et $a_{k+1} = x_{k+1} \underset{\circ}{\times} y_{k+1},$ on obtient $s_{k+2} = a_{k+1} \underset{\circ}{+} (a_k \underset{\circ}{+} s_k).$ On a aussi $s_{k+2} = (s_k \underset{\circ}{+} a_k) \underset{\circ}{+} a_{k+1},$ car l'opération $\underset{\circ}{+}$ est commutative.

On peut donc remplacer les deux opérateurs $MAC_k$ et $MAC_{k+1}$ par un circuit 1 représenté en figure 2C, recevant en entrée trois opérandes, $a_k$, $a_{k+1}$ et $s_k$. $a_k$ correspond à la multiplication saturante des opérandes $x_k$ et $y_k$, $a_{k+1}$ correspond à la multiplication saturante des opérateurs $x_{k+1}$ et $y_{k+1}$, et $s_k$ correspond au résultat du circuit précédent. Le circuit 1 fournit un résultat $s_{k+2}$ égal à $(s_k \underset{\circ}{+} a_k) \underset{\circ}{+} a_{k+1}.$ Les opérations fournissant les opérandes $a_k$ et $a_{k+1}$ sont exécutées hors du circuit 1.

Un problème des circuits connus de ce type est qu'ils effectuent des étapes de traitements complexes et nécessitent des éléments matériels importants.

Ainsi, dans l'art antérieur, une façon d'effectuer le calcul de la somme $s_{k+2} = (s_k \underset{\circ}{+} a_k) \underset{\circ}{+} a_{k+1},$ est la suivante. On calcule d'abord la somme usuelle, non saturante, de $s_k$ et de $a_k$. Ensuite, on regarde s'il y a eu saturation à l'aide d'un circuit de dépassement. S'il y a eu dépassement vers le haut, le résultat de la somme $s_k + a_k$ est remplacé par le nombre fractionnaire maximal et, s'il y a eu dépassement vers le bas, le résultat de la somme est remplacé par le nombre fractionnaire minimal. Ensuite, on procède à l'addition normale du résultat obtenu avec $a_{k+1}$. A nouveau, on teste si le résultat de l'addition dépasse les valeurs extrêmes autorisées par la représentation fractionnaire et, le cas échéant, les remplacements nécessaires sont effectués. Outre les inconvénients déjà mentionnés, les étapes de calcul sont longues et nécessitent d'évaluer par deux fois le dépassement supérieur et inférieur du résultat d'une opération.

Un objet de la présente invention est de prévoir un procédé et un circuit pour réaliser l'opération $s_{k+2} = (s_k \underset{\circ}{+} a_k) \underset{\circ}{+} a_{k+1},$ avec un nombre d'éléments matériels réduit.

Un autre objet de la présente invention est de prévoir un procédé et un circuit pour réaliser l'opération $s_{k+2} = (s_k \underset{\circ}{+} a_k) \underset{\circ}{+} a_{k+1}$ de façon particulièrement rapide.

Un autre objet de la présente invention est de prévoir un circuit de type MAC rapide et comportant un nombre d'éléments matériels réduits.

Pour atteindre ces objets, la présente invention prévoit un procédé, un circuit et un module tels que définis dans les revendications.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1A, déjà décrite, représente une série de circuits de type MAC utilisés dans un traitement de signal ;
la figure 1B illustre les fonctions réalisées par les circuits de la figure 1A ;
la figure 2A, déjà décrite, représente deux circuits de type MAC en série ;
la figure 2B illustre les fonctions des circuits de la figure 2A ;
la figure 2C, déjà décrite, représente un circuit utilisé en remplacement des deux circuits de la figure 2A ; et
la figure 3 représente un circuit selon la présente invention.

Pour réaliser l'opération $s_{k+2} = (s_k \overset{+}{_\circ} a_k) \overset{+}{_\circ} a_{k+1}$, la présente invention utilise les parties positive et négative d'un des opérandes au moins.

On rappelle que, par définition, la partie positive du nombre $a_k$ notée $a^+_k$, est égale à $a_k$ si $a_k$ est positif ou nul et égale à zéro si $a_k$ est négatif ou nul. La partie négative de $a_k$, notée $a^-_k$, est égale à $a_k$ si $a_k$ est négatif ou nul et égale à zéro si $a_k$ est positif ou nul. Une propriété des parties positive et négative d'un nombre $a_k$ est que $a^+_k + a^-_k = a_k$.

Les parties positive et négative sont calculées très simplement à partir du nombre et de son bit de signe, comme cela est décrit ci-après. L'utilisation des parties positive et négative d'un opérande va simplifier notablement le circuit réalisant l'opération. En outre, dans la présente invention, des circuits de dépassement classiques ne sont pas utilisés.

Dans la présente invention, trois sommes sont effectuées en parallèle, chaque somme étant représentative d'une valeur possible du résultat $s_{k+2}$. Parallèlement au calcul des trois sommes, sont déterminés deux indicateurs, S' et S", dont le calcul est bien plus simple qu'un calcul de dépassement des valeurs extrêmes. Le choix du résultat final est obtenu en sélectionnant une des trois sommes calculées en fonction de la valeur des indicateurs S' et S". Le calcul des indicateurs est réalisé en parallèle avec le calcul des sommes. L'obtention du résultat est très rapide, inférieure à un cycle d'horloge.

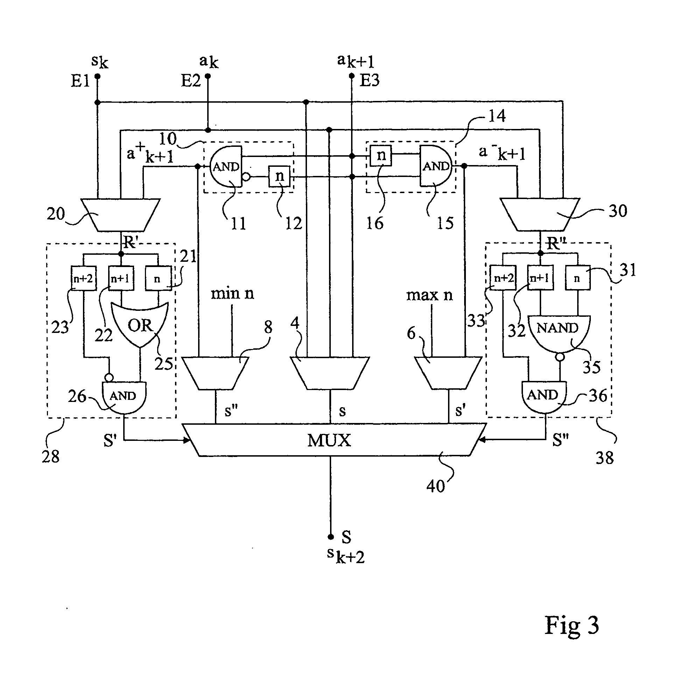

La figure 3 représente un circuit pour fournir le résultat d'une opération de type

$$s_{k+2} = (s_k \overset{+}{_\circ} a_k) \overset{+}{_\circ} a_{k+1}.$$ Le circuit possède trois entrées E1, E2, E3, recevant respectivement trois opérandes $s_k$, $a_k$ et $a_{k+1}$. Le circuit possède une sortie S, fournissant le résultat $s_{k+2}$ de l'opération. Les opérandes $s_k$, $a_k$ et $a_{k+1}$, de même que le résultat $s_{k+2}$, sont des nombres fractionnaires signés codés sur n bits.

Le circuit comporte trois additionneurs 4, 6 et 8. L'additionneur 4 est un additionneur à trois entrées, chacune d'entre elles recevant un des trois opérandes $a_k$, $a_{k+1}$ et $s_k$. Il fournit une somme s égale à $s_k+a_k+a_{k+1}$. L'additionneur 6 est un additionneur à deux entrées. Sur l'une d'elles, il reçoit la valeur extrême maximale, max n, qui correspond au nombre signé fractionnaire maximal représentable sur n bits. L'autre entrée de l'additionneur 6 reçoit la partie négative $a^-_{k+1}$ du troisième opérande. L'additionneur 6 fournit une somme s' égale à max n + $a^-_{k+1}$. L'additionneur 8 est un additionneur à deux entrées. Sur l'une d'elles, il reçoit la valeur extrême minimale de la représentation fractionnaire utilisée, min n. Sur l'autre entrée, il reçoit la partie positive $a^+_{k+1}$ du troisième opérande $a_{k+1}$. L'additionneur 8 fournit en sortie une somme s" égale à min n + $a^-_{k+1}$. En pratique, le circuit fournissant une sortie sur n bits, seuls les n bits les plus faibles des sommes s, s' et s" peuvent être utilisés par la suite. Les n bits de poids faible des sommes s, s' et s" peuvent être obtenus par simple troncature au niveau des additionneurs 4, 6 et 8, ou ultérieurement.

Les valeurs min n et max n, fournies respectivement aux additionneurs 8 et 6, peuvent être stockées ou déterminées de façon interne au circuit. Elles peuvent aussi être fournies au circuit, notamment dans le cas où le circuit est paramétrable et prévu pour fonctionner avec des opérandes codés sur des nombres de bits différents selon les applications.

La partie positive $a^+_{k+1}$ de l'opérateur $a_{k+1}$ est déterminée par un module 10. Le module 10 est constitué d'un module d'extraction de signe 12 et d'une porte 11 de type ET (AND) sur n bits, dont une entrée est inverseuse. L'entrée non inverseuse de la porte 11 reçoit le troisième opérande $a_{k+1}$. Sur son entrée inverseuse, la porte 11 reçoit le bit de signe répliqué en n exemplaires de l'opérande $a_{k+1}$. Ce bit est fourni par le module 12, qui reçoit l'opérande $a_{k+1}$ et en réplique en n exemplaires le bit le plus significatif, de rang n. La sortie de la porte 11 fournit la partie positive $a^+_{k+1}$ de l'opérande $a_{k+1}$.

La partie négative $a^-_{k+1}$ de l'opérande $a_{k+1}$ est déterminée par un module 14. Le module 14 comprend une porte 15 de type ET et un module d'extraction de signe 16. Le module 16 reçoit le troisième opérande $a_{k+1}$ et réplique en n exemplaires son bit le plus significatif, représentant le signe de l'opérande. La porte 15 reçoit sur une entrée le bit de signe répliqué en n exemplaires de l'opérande $a_{k+1}$, fourni par le module 16, et sur l'autre entrée l'opérande $a_{k+1}$. La sortie de la porte 15 fournit la partie négative $a^-_{k+1}$ du troisième opérande.

En même temps que la détermination des sommes s, s' et s", le circuit calcule deux indicateurs S' et S", dont la valeur permet la sélection de la somme correspondant au résultat.

Le calcul de l'indicateur S' est réalisé de la manière suivante. Un additionneur 20 à trois entrées reçoit le premier

opérande $s_k$, le deuxième opérande $a_k$ et la partie positive du troisième opérande $a^+_{k-1}$. Il fournit la somme R' de ces trois opérandes. Dans la mesure où chacun des opérandes est codé sur n bits, le résultat R' est fourni sur n+2 bits. Le résultat R' est fourni à trois modules d'extraction de bits 21, 22 et 23. Le module 21 fournit le nième bit du résultat R'. Le module 22 fournit le bit de rang n+1 du résultat R'. Le module 23 fournit le bit de rang n+2 du résultat R'. Les sorties des modules 21 et 22 alimentent une porte 25 de type OU (OR). La sortie de la porte 25 alimente une entrée non-inverseuse d'une porte 26 de type ET. La porte 26 comporte deux entrées, une non-inverseuse et une inverseuse. L'entrée inverseuse de la porte 26 reçoit le bit de rang n+2 du résultat R' fourni par le module 23. La sortie de la porte 26 fournit l'indicateur S', qui est égal à 1 seulement si le bit de rang n+2 du résultat R' est égal à 0 et l'un des deux bits de rang n ou n+1 du résultat R' est égal à 1. On démontre que l'indicateur S' est égal à 1 si $s_k + a_k + a_{k+1} > \max n + a^-_{k+1}$, ce qui est équivalent à $s_k + a_k + a^+_{k+1} > \max n$. L'indicateur S' est égal à 0 dans le cas contraire. L'ensemble constitué par les modules 21, 22, 23 et les portes 25 et 26 constitue un module 28 indicateur de dépassement vers le haut seulement et est particulièrement simple à mettre en oeuvre.

Le calcul de l'indicateur S" est réalisé de la manière suivante. Un additionneur 30 à trois entrées reçoit le premier opérande $s_k$, le deuxième opérande $a_k$ et la partie négative du troisième opérande, $a^-_{k+1}$. L'additionneur 30 fournit, sur n+2 bits, un résultat R" égal à la somme des trois signaux présents sur ses entrées. La sortie de l'additionneur attaque trois modules extracteurs de bits 31, 32 et 33. Le module 31 fournit le bit de rang n du résultat R". Le module 32 fournit le bit de rang n+1 du résultat R" et le module 33 fournit le bit de rang n+2 du résultat R". Les sorties des modules 31 et 32 attaquent une porte 35 de type NON ET (NAND). La sortie de la porte 35 attaque une entrée d'une porte 36 de type ET à deux entrées, recevant, sur son autre entrée, le bit de rang n+2 du résultat R", fourni par le module 33. La sortie de la porte 36 fournit le deuxième indicateur S", qui est égal à 1 seulement si le bit de rang n+2 du résultat R" est égal à 1 et l'un des deux bits de rang n ou n+1 est égal à zéro. On démontre que l'indicateur S" est égal à 1 si $s_k + a_k + a_{k+1} < \min n + a^+_{k+1}$, ce qui est équivalent à $s_k + a_k + a^-_{k+1} < \min n$. L'indicateur S" est égal à 0 dans le cas contraire. L'ensemble constitué par les modules 31, 32, 33 et les portes 35 et 36 constitue un module 38 indicateur de dépassement vers le bas particulièrement simple à mettre en oeuvre.

La sortie de la porte 26 est reliée à une première entrée de commande d'un multiplexeur 40 et la sortie de la porte 36 est reliée à une deuxième entrée de commande du multiplexeur 40. Le multiplexeur 40 comporte trois entrées, recevant respectivement les sommes s, s' et s", le cas échéant les n bits les plus faibles de ces sommes. Les indicateurs S' et S" commandent le multiplexeur 40 de sorte que le multiplexeur sélectionne la somme s' et fournit les n bits les plus faibles de cette somme si l'indicateur S' est égal à 1. Le multiplexeur 40 sélectionne la somme s" et fournit les n bits les plus faibles de cette somme si l'indicateur S" est égal à 1. Dans les autres cas, le multiplexeur fournit les n bits les plus faibles de la somme s. La sortie du multiplexeur est reliée à la sortie S du circuit. On notera que les indicateurs S' et S" ne peuvent pas être égaux à 1 en même temps.

Le circuit de la figure 3 est particulièrement avantageux car il utilise peu d'éléments. Par exemple, il n'utilise qu'un seul multiplexeur 40. Par ailleurs, un des problèmes de l'art antérieur résolu par l'invention concerne les circuits de dépassement. En effet, dans la présente invention, non seulement on évite l'emploi de modules de dépassement classiques, calculant à la fois un dépassement vers le haut et vers le bas, mais le calcul des indicateurs S' et S", témoins soit d'un dépassement vers le haut, soit d'un dépassement vers le bas, est effectué parallèlement au calcul de sommes, sans avoir besoin d'attendre le résultat des sommes. La simplification du circuit et le gain de temps sont significatifs. Dans les réalisations utilisant des circuits électroniques CMOS, il est possible de diminuer la consommation électrique de manière significative en abaissant la tension d'alimentation, au prix d'un accroissement des délais de propagation. Le gain de temps apporté par le circuit peut ainsi être exploité pour diminuer la consommation électrique.

On notera également que les éléments utilisés dans le circuit sont extrêmement rapides. L'ensemble des calculs peut être fourni en moins d'un cycle d'horloge. L'insertion d'un tel circuit dans un processeur de traitement de signal ou un bloc matériel dédié permet une très nette amélioration des performances dans de nombreuses applications, notamment les applications où le traitement doit être effectué de manière exacte au bit près. En effet, l'utilisation de ce circuit permet de sommer avec saturation deux fois plus d'opérandes par cycle que dans le cas où des additionneurs avec saturation classiques sont utilisés.

La valeur de n, nombre de bits sur lesquels sont codés les opérandes, peut être quelconque. Par exemple, n peut être égal à 32.

Bien entendu, la présente invention est susceptible de diverses variantes et modifications qui apparaîtront à l'homme de l'art. Par exemple, un ou plusieurs éléments constituant le circuit décrit pourront être remplacés par d'autres éléments réalisant globalement la même fonction.

On notera par ailleurs que le domaine de la présente invention s'étend à tout circuit ou procédé comprenant un opérateur réalisant l'opération $s_{k+2} = (s_k \underset{\circ}{+} a_k) \underset{\circ}{+} a_{k+1}$ selon la présente invention. Par exemple, le circuit de la présente invention peut être facilement complété pour réaliser la fonction d'un circuit de type MAC, le calcul des opérandes $a_k$ et $a_{k+1}$ étant intégré au circuit.

**Revendications**

1. Procédé pour déterminer, à l'aide d'un circuit, un résultat ($s_{k+2}$) d'une opération de type

$$s_{k+2} = (s_k \overset{+}{_\circ} a_k) \overset{+}{_\circ} a_{k+1}$$

dans lequel $s_k$, $a_k$, et $a_{k+1}$ sont des opérandes signés fractionnaires, et le symbole $\overset{+}{_\circ}$ représente une opération d'addition saturante, c'est-à-dire une addition dans laquelle le résultat est ramené le cas échéant à une valeur extrême autorisée par la représentation fractionnaire en cas de dépassement de cette valeur extrême, comprenant :

   - une étape de calcul de trois sommes (s, s', s") représentatives d'une valeur possible du résultat ($s_{k+2}$), et
   - une étape de sélection d'une desdites trois sommes,

dans lequel l'étape de calcul desdites trois sommes comprend :

   - la détermination des parties positive et négative de l'opérande $a_{k+1}$
   - le calcul d'une première somme (s) définie par

$$s = s_k + a_k + a_{k+1}$$

   - le calcul d'une deuxième somme (s') définie par

$$s' = \max n + a^-_{k+1},$$

   et
   - le calcul d'une troisième somme (s") définie par

$$s" = \min n + a^+_{k+1}$$

max n étant la valeur du nombre signé fractionnaire maximal, min n étant la valeur du nombre signé fractionnaire minimal, $a^+_{k+1}$ étant la partie positive de l'opérande $a_{k+1}$ et $a^-_{k+1}$ étant la partie négative de l'opérande $a_{k+1}$, la partie positive d'un opérande étant définie comme égale à l'opérande si l'opérande est un nombre positif et nulle dans le cas contraire, la partie négative d'un opérande étant définie comme étant égale à l'opérande si l'opérande est un nombre négatif et nulle dans le cas contraire,
et dans lequel l'étape de sélection comprend une étape de calcul d'un premier indicateur (S') et d'un deuxième indicateur (S") et fournit un résultat ($s_{k+2}$) égal :
   - à la deuxième somme (s') si le premier indicateur (S') indique que $s_{k} + a_k + a_{k+1} > \max n + a^-_{k+1}$,
   - à la troisième somme (s") si le deuxième indicateur (S") indique que $s_k + a_k + a_{k+1} < \min n + a^+_{k+1}$, et
   - à la première somme (s) dans les autres cas:

      procédé dans lequel la partie positive du troisième opérande $a_{k+1}$ est utilisée dans les étapes de calcul de la troisième somme (s") et dans les étapes de calcul du premier indicateur (S') et dans lequel la partie négative du troisième opérande $a_{k+1}$ est utilisée dans les étapes de calcul de la deuxième somme (s') et dans les étapes de calcul du deuxième indicateur (S").

2. Procédé selon la revendication 1, dans lequel l'étape de calcul des sommes (s, s', s") et l'étape de calcul des premier et second indicateurs sont réalisées en parallèle.

3. Circuit pour déterminer un résultat ($s_{k+2}$) d'une opération de type $s_{k+2} = (s_k \overset{+}{_\circ} a_k) \overset{+}{_\circ} a_{k+1}$
   dans lequel $s_k$, $a_k$, et $a_{k+1}$ sont respectivement des premier, deuxième et troisième opérandes représentés sous la
   forme de nombres fractionnaires signés codés sur n bits, le symbole $\overset{+}{_\circ}$ représentant une opération d'addition saturante, c'est-à-dire une addition dans laquelle le résultat est ramené le cas échéant à une valeur extrême autorisée par la représentation fractionnaire en cas de dépassement de cette valeur extrême, comprenant :
un moyen de calcul (4, 6, 8, 10, 14) de trois sommes (s, s', s") représentatives d'une valeur possible du résultat ($s_{k+2}$), connecté pour recevoir les premier, deuxième et troisième opérandes et

- un moyen de sélection (20, 28, 30, 38, 40) d'une desdites trois sommes, couplé au moyen de calcul,

dans lequel le moyen de calcul desdites trois sommes est adapté à effectuer :

- la détermination des parties positive et négative de l'opérande $a^-_{k+1}$
- le calcul d'une première somme (s) définie par

$$s = s_k + a_k + a_{k+1}$$

- le calcul d'une deuxième somme (s') définie par

$$s' = \max n + a^-_{k+1},$$

et
- le calcul d'une troisième somme (s") définie par

$$s'' = \min n + a^+_{k+1}$$

max n étant la valeur du nombre signé fractionnaire maximal, min n étant la valeur du nombre signé fractionnaire minimal, $a^+_{k+1}$ étant la partie positive de l'opérande $a_{k+1}$ et $a^-_{k+1}$ étant la partie négative de l'opérande $a_{k+1}$, la partie positive d'un opérande étant définie comme égale à l'opérande si l'opérande est un nombre positif et nulle dans le cas contraire, la partie négative d'un opérande étant définie comme étant égale à l'opérande si l'opérande est un nombre négatif et nulle dans le cas contraire,
et dans lequel le circuit est adapté de manière que le moyen de sélection est adapté à calculer un premier indicateur (S') et un deuxième indicateur (S") et fournit un résultat ($s_{k+2}$) égal :
- à la deuxième somme (s') si le premier indicateur (S') indique que $s_k + a_k + a_{k+1} > \max n + a^-_{k+1}$,
- à la troisième somme (s") si le deuxième indicateur (S") indique que $s_k + a_k + a_{k+1} < \min n + a^+_{k+1}$, et
- à la première somme (s) dans les autres cas, le circuit étant adapté de manière que la partie positive du troisième opérande $a_{k+1}$ est utilisée dans les étapes de calcul de la troisième somme (s") et dans les étapes de calcul du premier indicateur (S') et dans lequel la partie négative du troisième opérande $a_{k+1}$ est utilisée dans les étapes de calcul de la deuxième somme (s') et dans les étapes de calcul du deuxième indicateur (S").

4. Circuit selon la revendication 3, dans lequel le moyen de calcul comprend :

- une porte ET (11) alimentée par le troisième opérande ($a_{k+1}$) et l'inverse du bit de signe répliqué n fois du troisième opérande pour fournir la partie positive du troisième opérande ($a^+_{k+1}$) et
- une porte ET (15) alimentée par le troisième opérande ($a_{k+1}$) et le bit de signe répliqué n fois du troisième opérande pour fournir la partie négative ($a^-_{k+1}$) du troisième opérande.

5. Circuit selon la revendication 4, dans lequel le moyen de calcul comporte en outre :

- un premier additionneur (4) pour recevoir les premier, deuxième et troisième opérandes et fournir ladite première somme (s),
- un deuxième additionneur (6) pour fournir ladite deuxième somme (s') et recevoir la partie négative ($a^-_{k+1}$) du troisième opérande et la valeur du nombre signé fractionnaire maximal codé sur n bits (max n), et
- un troisième additionneur (8) pour fournir ladite troisième somme (s") et recevoir la partie positive du troisième opérande ($a^+_{k+1}$) et la valeur du nombre signé fractionnaire minimal codé sur n bits (min n).

**6.** Circuit selon l'une quelconque des revendications 4 et 5, dans lequel le moyen de sélection comprend :

- un quatrième additionneur (20) pour recevoir le premier opérande, le deuxième opérande et la partie positive du troisième opérande calculée par le moyen de calcul,
- un module indicateur de dépassement vers le haut (28) pour recevoir le résultat du quatrième additionneur (20) et fournir le premier indicateur (S'),
- un cinquième additionneur (30) pour recevoir le premier opérande, le deuxième opérande et la partie négative du troisième opérande calculée par le moyen de calcul,
- un module indicateur de dépassement vers le bas (38) pour recevoir le résultat du cinquième additionneur (30) et fournir le deuxième indicateur (S"), et
- un multiplexeur (40) pour recevoir lesdites première, deuxième et troisième sommes calculées par le moyen de calcul et fournir le résultat $s_{k+2}$ de l'opération, le multiplexeur étant adapté à être commandé par les premier et deuxième indicateurs.

**7.** Module réalisant une fonction de type MAC, **caractérisé en ce qu'**il est adapté à utiliser un procédé selon l'une quelconque des revendications 1 et 2 ou **en ce qu'**il comprend un circuit selon l'une quelconque des revendications 3 à 6.

## Claims

**1.** A method for determining, by means of a circuit, a result ($s_{k+2}$) of an operation of the type

$$s_{k+2} = (s_k \overset{+}{_\circ} a_k) \overset{+}{_\circ} a_{k+1}$$

where $s_k$, $a_k$, and $a_{k+1}$ are fractional signed operands and symbol $\overset{+}{_\circ}$ represents a saturating addition operation, that is, an addition in which the result is brought back if necessary to a limiting value allowed by the fractional representation in case this limiting value is exceeded, comprising:

- a step of calculation of three sums (s, s', s") representative of a possible value of the result ($s_{k+2}$), and
- a step of selection of one of said three sums,

wherein the step of calculation of said three sums comprises:

- the determination of the positive and negative parts of the operand $a_{k+1}$,
- the calculation of a first sum (s) defined by

$$s = s_k + a_k + a_{k+1}$$

- the calculation of a second sum (s') defined by

$$s' = \max n + a^-_{k+1},$$

and
- the calculation of a third sum (s") defined by

$$s'' = \min n + a^+_{k+1}$$

max n being the value of the maximum fractional signed number, min n being the value of the minimum fractional signed number, $a^+_{k+1}$ being the positive part of operand $a_{k+1}$ and $a^-_{k+1}$ being the negative part of operand $a_{k+1}$, the positive part of an operand being defined as being equal to the operand if the operand is a positive number and to zero otherwise, the negative part of an operand being defined as being equal to the operand if the operand is a negative number and to zero otherwise,
and wherein the selection step comprises a step of calculation of a first indicator (S') and of a second indicator
(S") and provides a result ($s_{k+2}$) equal to:
- the second sum (s') if the first indicator (S') indicates that $s_k + a_k + a_{k+1} > \max n + a^-_{k+1}$,
- the third sum (s") if the second indicator (S") indicates that $s_k + a_k + a_{k+1} < \min n + a^+_{k+1}$, and
- the first sum (s) in all other cases,
method in which the positive part of the third operand $a_{k+1}$ is used during the calculation steps of the third sum
(s") and during the calculation steps of the first indicator (S'), and in which the negative part of the third operand
$a_{k+1}$ is used during the calculation steps of the second sum (s') and during the calculation steps of the second
indicator (S").

2. The method of claim 1, wherein the step of calculation of the sums (s, s', s") and the step of calculation of the first
and second indicators are performed in parallel.

3. A circuit for determining, a result ($s_{k+2}$) of an operation of the type $s_{k+2} = (s_k \underset{\circ}{+} a_k) \underset{\circ}{+} a_{k+1}$

where $s_k$, $a_k$, and $a_{k+1}$ are respectively are first, second, and third operands represented in the form of signed fractional numbers coded over n bits, the symbol $\underset{\circ}{+}$ represents a saturating addition operation, that is, an addition
in which the result is brought back if necessary to a limiting value allowed by the fractional representation in case
this limiting value is exceeded, comprising:

- means (4, 6, 8, 10, 14) for calculating three sums (s, s', s") representative of a possible value of the result
($s_{k+2}$), connected for receiving the first, second, and third operands, and
- means (20, 28, 30, 38, 40) for selecting one of said three sums coupled with said calculating means,

wherein the means for calculating said three sums is adapted for:

- the determination of the positive and negative parts of the operand $a_{k+1}$,
- the calculation of a first sum (s) defined by

$$s = s_k + a_k + a_{k+1}$$

- the calculation of a second sum (s') defined by

$$s' = \max n + a^-_{k+1},$$

and
- the calculation of a third sum (s") defined by

$$s'' = \min n + a^+_{k+1}$$

max n being the value of the maximum fractional signed number, min n being the value of the minimum fractional
signed number, $a^+_{k+1}$ being the positive part of operand $a_{k+1}$ and $a^-_{k+1}$ being the negative part of operand $a_{k+1}$,
the positive part of an operand being defined as being equal to the operand if the operand is a positive number
and to zero otherwise, the negative part of an operand being defined as being equal to the operand if the operand
is a negative number and to zero otherwise,
and wherein the circuit is adapted for having the selecting means to calculate a first indicator (S') and a second
indicator (S") and to provide a result ($s_{k+2}$) equal to:
- the second sum (s') if the first indicator (S') indicates that $s_k + a_k + a_{k+1} > \max n + a^-_{k+1}$,
- the third sum (s") if the second indicator (S") indicates that $s_k + a_k + a_{k+1} < \min n + a^+_{k+1}$, and
- the first sum (s) in all other cases,
the circuit being adapted so that the positive part of the third operand $a_{k+1}$ is used during the calculation steps
of the third sum (s") and during the calculation steps of the first indicator (S'), and in which the negative part of the third operand $a_{k+1}$ is used during the calculation steps of the second sum (s') and during the calculation steps of the second indicator (S").

4. The circuit of claim 3, wherein the calculating means comprise:

- an AND gate (11) supplied by the third operand ($a_{k+1}$) and the inverse of the sign bit replicated n times of the third operand for providing the positive part of the third operand ($a^+_{k+1}$), and
- an AND gate (15) supplied by the third operand ($a_{k+1}$) and the sign bit replicated n times of the third operand for providing the negative part of the third operand ($a^-_{k+1}$).

5. The circuit of claim 4, wherein the calculating means further comprise:

- a first adder (4) receiving the first, second, and third operands and providing said first sum (s),
- a second adder (6) providing said second sum (s') and receiving the negative part ($a^-_{k+1}$) of the third operand and the value of the maximum fractional signed number coded over n bits (max n), and
- a third adder (8) providing said third sum (s") and receiving the positive part of the third operand ($a^+_{k+1}$) and the value of the minimum fractional signed number coded over n bits (min n).

6. The circuit of claim 4 or 5, wherein the selection means comprise:

- a fourth adder (20) receiving the first operand, the second operand, and the positive part of the third operand calculated by the calculating means,
- a unit for indicating an upward overflow (28) receiving the result of the fourth adder (20) and providing the first indicator (S'),
- a fifth adder (30) receiving the first operand, the second operand, and the negative part of the third operand calculated by the calculating means,
- a unit for indicating a downward overflow (38) receiving the result of the fifth adder (30) and providing the second indicator (S"), and
- a multiplexer (40) for receiving said first, second, and third sums calculated by the calculating means and providing the result $s_{k+2}$ of the operation, the multiplexer being adapted to be controlled by the first and second indicators.

7. A unit performing a function of MAC type, **characterized in that** it is adapted to use the method of claim 1 or 2 or to comprise the circuit of any of claims 3 to 6.

**Patentansprüche**

1. Ein Verfahren zum Bestimmen, mittels einer Schaltung, eines Ergebnisses ($s_{k+2}$) von einer Operation des Typs

$$s_{k+2} = (s_k \overset{+}{\circ} a_k) \overset{+}{\circ} a_{k+1}$$

wobei $s_k$, $a_k$, und $a_{k+1}$ gebrochene vorzeichenbehaftete Operanden sind und das Symbol $\overset{+}{\circ}$ eine saturierende Additionsoperation repräsentiert, das heißt eine Addition bei der das Ergebnis, falls notwendig, zurückgebracht wird auf einen Grenzwert, der durch die gebrochene Repräsentation zugelassen wird, und zwar im Falle, dass dieser Grenzwert überschritten wird, wobei das Verfahren Folgendes aufweist:

- einen Schritt zur Berechnung von drei Summen (s, s', s"), repräsentativ für einen möglichen Wert von dem Ergebnis ($s_{k+2}$), und
- einen Schritt zur Auswahl von einer von den drei Summen,

wobei der Schritt zur Berechnung von den drei Summen Folgendes aufweist:

- die Bestimmung von den positiven und negativen Teilen von dem Operanden $a_{k+1}$,

- die Berechnung von einer ersten Summe (s), definiert durch

$$s = s_k + a_k + a_{k+1}$$

- die Berechnung von einer zweiten Summe (s'), definiert durch

$$s' = \max n + a^-_{k+1},$$

und
- die Berechnung von einer dritten Summe (s"), definiert durch

$$s'' = \min n + a^+_{k+1}$$

- wobei max n der Wert von der maximalen gebrochenen vorzeichenbehafteten Zahl ist,
- min n der Wert von der minimalen gebrochenen vorzeichenbehafteten Zahl ist,
$a^+_{k+1}$ der positive Teil von dem Operanden $a_{k+1}$ und $a^-_{k+1}$ der negative Teil von dem Operanden $a_{k+1}$ ist, der positive Teil von einem Operanden definiert ist als sei er gleich dem Operanden, falls der Operand eine positive Zahl ist und anderenfalls gleich null, der negative Teil von einem Operanden definiert ist als sei er gleich dem Operanden, falls der Operand eine negative Zahl ist und anderenfalls gleich null,
und wobei der Auswahlschritt einen Schritt aufweist zur Berechnung von einem ersten Indikator (S') und von einem zweiten Indikator (S") und ein Ergebnis ($s_{k+2}$) vorsieht das gleich ist zu:
- der zweiten Summe (s'), falls der erste Indikator (S') anzeigt, dass

$$s_k + a_k + a_{k+1} > \max n + a^-_{k+1},$$

- der dritten Summe (s"), falls der zweite Indikator (S") anzeigt, dass

$$s_k + a_k + a_{k+1} < \min n + a^+_{k+1},$$

und
- der ersten Summe (s) in allen anderen Fällen,

wobei bei dem Verfahren, bei dem der positive Teil von dem dritten Operanden $a_{k+1}$ während der Berechnung Schritte von der dritten Summe (s") genutzt wird und während der Berechnung Schritte von dem ersten Indikator (S') genutzt wird, und bei dem der negative Teil von dem dritten Operanden $a_{k+1}$ während der Berechnung Schritte von der zweiten Summe (s') und während der Berechnung Schritte von dem zweiten Indikator (S") genutzt wird.

2. Verfahren nach Anspruch 1, wobei der Schritt zur Berechnung von den Summen (s, s', s") und der Schritt zur Berechnung von den ersten und zweiten Indikatoren parallel ausgeführt werden.

3. Eine Schaltung zum Bestimmen eines Ergebnisses ($s_{k+2}$) von einer Operation des Typs

$$s_{k+2} = (s_k \underset{\circ}{+} a_k) \underset{\circ}{+} a_{k+1},$$

wobei $s_k$, $a_k$, und $a_{k+1}$ entsprechend erste, zweite und dritte Operanden sind, die repräsentiert sind in der Form von vorzeichenbehafteten gebrochenen bzw. fraktionalen Zahlen, die über n Bits kodiert sind, wobei das Symbol $\underset{\circ}{+}$

eine saturierende Additionsoperation repräsentiert, das heißt eine Addition, bei der das Ergebnis, falls notwendig, zurückgebracht wird auf einen Grenzwert, der durch die gebrochene Repräsentation zugelassen wird, und zwar in dem Fall, in dem dieser Grenzwert überschritten wird, wobei die Schaltung Folgendes aufweist:

- Mittel (4, 6, 8, 10, 14) zum Berechnen von drei Summen (s, s', s"), die repräsentativ sind für einen möglichen Wert von dem Ergebnis ($s_{k+2}$), verbunden zum Empfangen der ersten, zweiten und dritten Operanden, und
- Mittel (20, 28, 30, 38, 40) zum Auswählen einer von den drei Summen, gekoppelt mit den Berechnungsmitteln,

wobei die Mittel zum Berechnen der drei Summen angepasst sind für:

- die Bestimmung von den positiven und negativen Teilen von dem Operanden $a_{k+1}$,
- die Berechnung von einer ersten Summe (s), definiert durch

$$s = s_k + a_k + a_{k+1}$$

- die Berechnung von einer zweiten Summe (s'), definiert durch

$$s' = \max n + a^-_{k+1},$$

und
- die Berechnung von einer dritten Summe (s"), definiert durch

$$s'' = \min n + a^+_{k+1}$$

wobei max n der Wert von der maximalen gebrochenen vorzeichenbehafteten Zahl ist, min n der Wert von der minimalen gebrochenen vorzeichenbehafteten Zahl ist,
$a^+_{k+1}$ der positive Teil von dem Operanden $a_{k+1}$ ist und $a^-_{k+1}$ der negative Teil von dem Operanden $a_{k+1}$ ist, der positive Teil von einem Operanden definiert ist als sei er gleich dem Operanden, falls der Operand eine positive Zahl ist und anderenfalls gleich null, der negative Teil von einem Operanden definiert ist als sei er gleich dem Operanden, falls der Operand eine negative Zahl ist und gleich null anderenfalls,
und wobei die Schaltung angepasst ist sodass die Auswahlmittel einen ersten Indikator (S') und einen zweiten Indikator (S") berechnen und ein Ergebnis ($s_{k+2}$) vorsehen, und zwar gleich zu:

- der zweiten Summe (s'), falls der erste Indikator (S') anzeigt, dass

$$s_k + a_k + a_{k+1} > \max n + a^-_{k+1}$$

ist,
- der dritten Summe (s"), falls der zweite Indikator (S") anzeigt, dass

$$s_k + a_k + a_{k+1} < \min n + a^+_{k+1}$$

ist, und
- der ersten Summe (s), in allen anderen Fällen, die Schaltung angepasst ist derart, dass der positive Teil von dem dritten Operanden $a_{k+1}$, während den Berechnungsschritten von der dritten Summe (s") und während den Berechnungsschritten von dem ersten Indikator (S') genutzt wird und wobei der negative Teil von dem dritten Operanden $a_{k+1}$ während den Berechnungsschritten von der zweiten Summe (s') und während den Berechnungsschritten von dem zweiten Indikator (S") genutzt wird.

**4.** Schaltung nach Anspruch 3, wobei die Berechnungsmittel Folgendes aufweisen:

- ein UND Gatter (11), angesteuert durch den dritten Operanden ($a_{k+1}$) und dem Inversen von dem n Mal replizierten Vorzeichenbit von dem dritten Operanden zum Vorsehen des positiven Teils von dem dritten Operanden ($a^+_{k+1}$), und
- ein UND Gatter (15), angesteuert durch den dritten Operanden ($a_{k+1}$) und dem n Mal replizierten Vorzeichenbit von dem dritten Operanden zum Vorsehen des negativen Teils von dem dritten Operanden ($a^-_{k+1}$).

**5.** Schaltung nach Anspruch 4, wobei die Berechnungsmittel ferner Folgendes aufweisen:

- einen ersten Addierer (4) zum Empfangen der ersten, zweiten und dritten Operanden und zum Vorsehen der ersten Summe (s),
- einen zweiten Addierer (6) zum Vorsehen der zweiten Summe (s') und zum Empfangen des negativen Teils ($a^-_{k+1}$) von dem dritten Operanden und dem Wert von der maximalen gebrochenen vorzeichenbehafteten Zahl und zwar über n Bits (max n) kodiert, und
- einen dritten Addierer (8) zum Vorsehen der dritten Summe (s") und zum Empfangen des positiven Teils von dem dritten Operanden ($a^+_{k+1}$) und dem Wert von der minimalen gebrochenen vorzeichenbehafteten Zahl und zwar kodiert über n Bits (min n).

**6.** Schaltung nach Anspruch 4 oder 5, wobei die Auswahlmittel Folgendes aufweisen:

- einen vierten Addierer (20), zum Empfangen des ersten Operanden, des zweiten Operanden und des positiven Teils von dem dritten Operanden, berechnet durch die Berechnungsmittel,
- eine Einheit zum Anzeigen eines aufwärtigen Überlaufs (28), zum Empfangen des Ergebnisses von dem vierten Addierer (20) und zum Vorsehen des ersten Indikators (S'),
- einen fünften Addierer (30), zum Empfangen des ersten Operanden, des zweiten Operanden und des negativen Teils von dem dritten Operanden, berechnet durch die Berechnungsmittel,
- eine Einheit zum Anzeigen eines abwärtigen Überlaufs (38), zum Empfangen des Ergebnisses von dem fünften Addierer (30) und zum Vorsehen des zweiten Indikators (S"), und
- einen Multiplexer (40) zum Empfangen der ersten, zweiten und dritten Summen, berechnet durch die Berechnungsmittel und zum Vorsehen des Ergebnisses $s_{k+2}$ von der Operation, wobei der Multiplexer angepasst ist, um durch die ersten und zweiten Indikatoren gesteuert zu werden.

**7.** Eine Einheit zum Ausführen einer Funktion vom MAC-Typ, **dadurch gekennzeichnet, dass** sie angepasst ist zum Nutzen des Verfahrens nach Anspruch 1 oder 2 oder dass sie die Schaltung nach irgendeinem der Ansprüche 3 bis 6 aufweist.

$y_1$ $x_1$      $y_2$ $x_2$      $y_3$ $x_3$

MAC1    MAC2    MAC3

$s_1$      $s_2$      $s_3$      $s_4$

Fig 1A

$$s_2 = (x_1 \times y_1) + s_1$$

$$s_3 = (x_2 \times y_2) + s_2$$

$$s_4 = (x_3 \times y_3) + s_3$$

Fig 1B

Fig 2A

$$s_{k+1} = (x_k \times y_k) + s_k$$

$$s_{k+2} = (x_{k+1} \times y_{k+1}) + s_{k+1}$$

$$s_{k+2} = (x_{k+1} \times y_{k+1}) + [(x_k \times y_k) + s_k]$$

$$\left. \begin{array}{l} s_{k+2} = a_{k+1} + (a_k + s_k) \\[2ex] s_{k+2} = (s_k + a_k) + a_{k+1} \end{array} \right\} \text{avec} \quad \begin{array}{l} a_k = x_k \times y_k \\[2ex] a_{k+1} = x_{k+1} \times y_{k+1} \end{array}$$

Fig 2B

Fig 2C

Fig 3